(19) Europäisches Patentamt
European Patent Office
Office européen des brevets

(11) Veröffentlichungsnummer: **0 293 684 B1**

# (12) EUROPÄISCHE PATENTSCHRIFT

(45) Veröffentlichungstag der Patentschrift: **14.07.93**

(51) Int. Cl.$^5$: **C08G 77/42**, B01D 19/04

(21) Anmeldenummer: **88108073.3**

(22) Anmeldetag: **20.05.88**

Die Akte enthält technische Angaben, die nach dem Eingang der Anmeldung eingereicht wurden und die nicht in dieser Patentschrift enthalten sind.

## (54) Verwendung von organosiliciummodifizierten Polydienen als Entschäumungs- und Entlüftungsmittel für organische Systeme.

(30) Priorität: **03.06.87 DE 3718588**

(43) Veröffentlichungstag der Anmeldung:
**07.12.88 Patentblatt 88/49**

(45) Bekanntmachung des Hinweises auf die Patenterteilung:
**14.07.93 Patentblatt 93/28**

(84) Benannte Vertragsstaaten:
**BE FR GB IT NL**

(56) Entgegenhaltungen:
**EP-A- 0 094 550**
**DE-A- 2 321 557**
**GB-A- 1 353 743**

(73) Patentinhaber: **Th. Goldschmidt AG**
**Goldschmidtstrasse 100 Postfach 101461**
**W-4300 Essen 1(DE)**

(72) Erfinder: **Berger, Roland, Dr.**
**Spelbergs Busch 6**
**W-4630 Bochum 6(DE)**
Erfinder: **Fink, Hans-Ferdi**
**Brassertstrasse 46**
**W-4300 Essen 1(DE)**
Erfinder: **Heilen, Wernfried**
**Am Marienstift 7**
**W-4234 Alpen(DE)**
Erfinder: **Holthoff, Hubert**
**Antoniusstrasse 71**
**W-4760 Werl-Sönnern(DE)**
Erfinder: **Weitemeyer, Christian, Dr.**
**Sundernholz 67**
**W-4300 Essen 1(DE)**

**EP 0 293 684 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Als Entschäumungsmittel im Sinne der vorliegenden Erfindung werden Produkte bezeichnet, welche in der Lage sind, vorzugsweise auf der Oberfläche eines flüssigen Systems befindliche Schaumblasen mit lamellar ausgebildeten Wänden zu zerstören oder deren Entstehung zu verhindern.

Unter Entlüftungsmitteln werden im Sinne der vorliegenden Erfindung Mittel verstanden, welche geeignet sind, in einem flüssigen System enthaltene kleine Gasblasen zum Aufschwimmen an die Oberfläche zu veranlassen, wobei diese kleinen Gasblasen an der Oberfläche zerplatzen.

Bei der Entschäumung werden die Trennwände zwischen den einzelnen Schaumblasen zerstört oder deren stabile Ausbildung verhindert. Die Schaumblasen haben dabei im allgemeinen eine polyedrische Gestalt. Die bei der Entlüftung zu beseitigenden Gasbläschen sind im allgemeinen wesentlich kleiner, kugelförmig und so weit voneinander getrennt, daß sich zwischen diesen einzelnen Gasbläschen keine Lamellen ausbilden.

Bei der Entschäumung organischer Systeme handelt es sich insbesondere um die Entschäumung von frisch gefördertem und durch die Druckentspannung entgasendem Erdöl sowie um die Entschäumung bzw. Vermeidung der Schaumbildung bei der Weiterverarbeitung, insbesondere der destillativen Aufbereitung von Erdöl und Erdölprodukten. Entschäumungsmittel werden weiter zur Entschäumung von Mineralölen oder Mineralöl enthaltenden Zubereitungen benötigt.

Entlüftungsmittel werden zur Verbesserung des sogenannten Luftabscheidevermögens in Mineralölen und deren Zubereitungen, wie z.B. Hydraulikölen, verwendet. Ein weiteres Anwendungsgebiet für Entlüftungsmittel für organische Systeme besteht in der Entlüftung von Beschichtungssystemen, wie Lacken oder Organosolen.

Lamellare Schäume und Mikroschäume bedürfen zu ihrer Zerstörung oder zur Vermeidung ihrer Ausbildung aufgrund ihrer Unterschiede in der Ausbildung und der Struktur in der Regel unterschiedlich aufgebauter Produkte. Die Entschäumungs- und Entlüftungsmittel müssen außerdem in ihrem chemischen Aufbau dem System, in dem sie eingesetzt werden, angepaßt werden, um zu erreichen, daß sie in dem System in der notwendigen Weise verteilt und wirksam werden können.

Aus der EP-A-94 550 ist ein Mittel zum Entlüften von Beschichtungssystemen bekannt, wobei die Beschichtungssysteme aus wäßriger Phase auf Oberflächen aufgebracht werden und polymere organische Filmbildner enthalten, mit dem Kennzeichen, daß es ein lineares Polymerisat in wirksamen Mengen enthält, wobei das Polymerisat mindestens fünf seitenständig gebundene Gruppen aufweist, welche jeweils ein Siliciumatom enthalten, das über eine zweiwertige Kohlenwasserstoffgruppe mit dem Polymerisat verknüpft ist, und wobei das Siliciumatom mindestens eine Gruppe $R^1$ der Formel $O\text{-}[C_nH_{2n}O\text{-}]_xQ$ trägt, wobei n = 2 bis 8, x = 1 bis 10, Q ein Alkylrest mit 1 bis 18 Kohlenstoffatomen, ein Arylrest, ein Alkarylrest oder ein Acylrest mit 2 bis 18 Kohlenstoffatomen ist und die Summe der Kohlenstoff- und Sauerstoffatome der Gruppe $R^1 \geq 5$ ist.

Beispiel einer gemäß EP-A-94 550 zu verwendenden Verbindung ist eine Verbindung der Formel

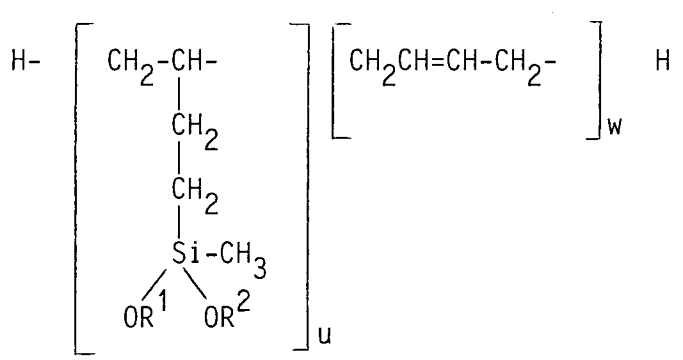

u = 33,31
w = 3,69
u : w = 9,027

Diese Mittel haben sich für die Beseitigung von sogenanntem Mikroschaum und somit als Entlüftungsmittel bewährt. Sie sind jedoch als Entschäumungsmittel für organische Systeme nur mäßig wirksam.

In der DE-OS 23 21 557 ist ein Verfahren zur Herstellung von Blockcopolymerisaten mit Polyether- und gegebenenfalls partiell hydrierten Polydien-Blöcken, die über siliciumorganische Brückenglieder miteinander verbunden sind, beschrieben. Diese Blockcopolymerisate werden als Zusatzmittel zur Herstellung von Polyurethanschaum verwendet, wobei sie den sich bildenden Schaum stabilisieren und einem Schaumzerfall entgegenwirken. Die Blockcopolymerisate sollen auch als Trennmittel, Dismulgatoren, Textil-Präparationsmittel und in der Kosmetik verwendet werden. In kosmetischen Präparaten verbessern sie die Gleitfähigkeit und beeinflussen die Konsistenz von Cremes und Salben.

Überraschenderweise wurde nun gefunden, daß derartige Verbindungen in organischen Systemen, wie Erdöl, Mineralöl, Farben und Lacken, als Entschäumungs- und/oder Entlüftungsmittel besonders wirksam sind. Die Verbindungen sind in ihrer Struktur so variabel, daß sie dem jeweiligen System, in dem sie angewendet werden sollen, angepaßt werden können. So kann beispielsweise die Löslichkeit der Blockcopolymerisate in dem organischen System durch das Verhältnis von Polysiloxanblöcken zu dem kohlenstofforganischen Anteil, insbesondere den Polyetherblöcken, in gewünschter Weise eingestellt werden.

Gegenstand vorliegender Erfindung ist somit die Verwendung von Verbindungen der allgemeinen Formel

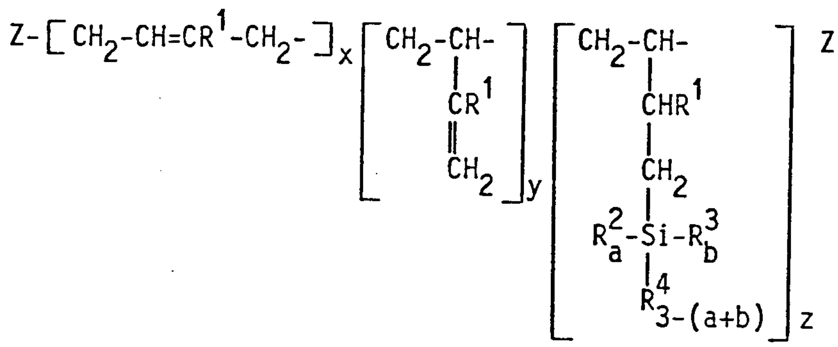

I

in Mengen von 0,01 bis 1,0 Gew.-% zur Entschäumung und/oder Entlüftung organischer Systeme, wie Erdöl, Hydrauliköle, Lacke oder Farben.

In dieser Formel haben die Gruppen und Indices folgende Bedeutung:

Z ist eine Polydienkette begrenzende Gruppe, welche herstellungsbedingt von der Polymerisation des Diens, z.B. 1.3-Butadiens, herrührt. Beispiele solcher Reste Z sind Wasserstoffreste oder OH-Gruppen.

$R^1$ ist ein Wasserstoff- oder Methylrest.

$R^2$ ist ein Alkylrest mit 1 bis 6 Kohlenstoffatomen oder der Phenylrest. Bevorzugter Alkylrest ist der Methylrest. $R^2$ kann jedoch auch als Alkylrest die Bedeutung eines Ethyl-, Propyl-, Butyl-, Isobutyl- oder Hexylrestes haben.

$R^3$ ist ein um ein Wasserstoffatom der Hydroxylgruppe verminderter Alkoholrest der Formel $OR^5$. $R^5$ kann ein Alkylrest oder ein Fluoralkylrest der Formel $C_pF_{2p+1}(CH_2)_2$- sein, wobei p eine Zahl von 4 bis 16 bedeutet. $R^5$ kann jedoch auch die Bedeutung des Restes $(C_nH_{2n}O)_mR^6$ haben. n ist 2 oder 3. m ist $\geqq 1$. $R^6$ ist ein Alkylrest, ein Acylrest oder ein Alkylarylrest. $R^5$ ist vorzugsweise ein Alkylrest mit bis zu 20 Kohlenstoffatomen. Der Rest $R^3$ leitet sich somit von einem Alkanol, einem Fluoralkanol oder einem Polyoxyalkylenmonool ab. Durch die Auswahl dieses Restes kann die Verträglichkeit des erfindungsgemäß zu verwendenden Polydiens mit dem zu entschäumenden oder zu entlüftenden organischen System beeinflußt werden.

$R^4$ ist ein Polysiloxanylrest der Formel

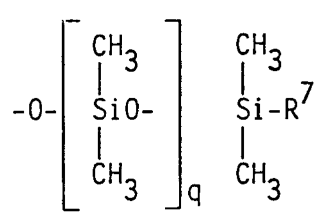

$R^7$ ist dabei ein Alkylrest mit 1 bis 6 Kohlenstoffatomen oder ein Phenylrest. q ist gleich oder größer 3 und vorzugsweise ein Mehrfaches der Zahl 3. q kann dabei Werte bis zu mehreren Tausend annehmen.

Die Indices x und y sind gleich oder größer 0. Sie werden durch die nicht modifizierten Anteile des Ausgangspolydiens gebildet. z ist ≧ 3 und gibt die Anzahl der organosiliciummodifizierten Einheiten wieder. Vorzugsweise ist z 3 bis 50. a und b haben einen Wert von 0 bis 2. Sie müssen jedoch die Bedingung erfüllen, daß ihre Summe ≦ 2 ist. Vorzugsweise ist die Summe a + b 0 oder 1.

Die erfindungsgemäß zu verwendenden organosiliciummodifizierten Polydiene sind je nach Molekulargewicht flüssige bis hochviskose Substanzen. Die Polydiene der allgemeinen Formel I liegen in Form ihrer Gemische unterschiedlichen Molekulargewichts vor. Die Indices x, y, z, a + b können deshalb in der allgemeinen Formel auch gebrochene Zahlenwerte aufweisen.

Beispiele erfindungsgemäß zu verwendender organosiliciummodifizierter Polydiene sind

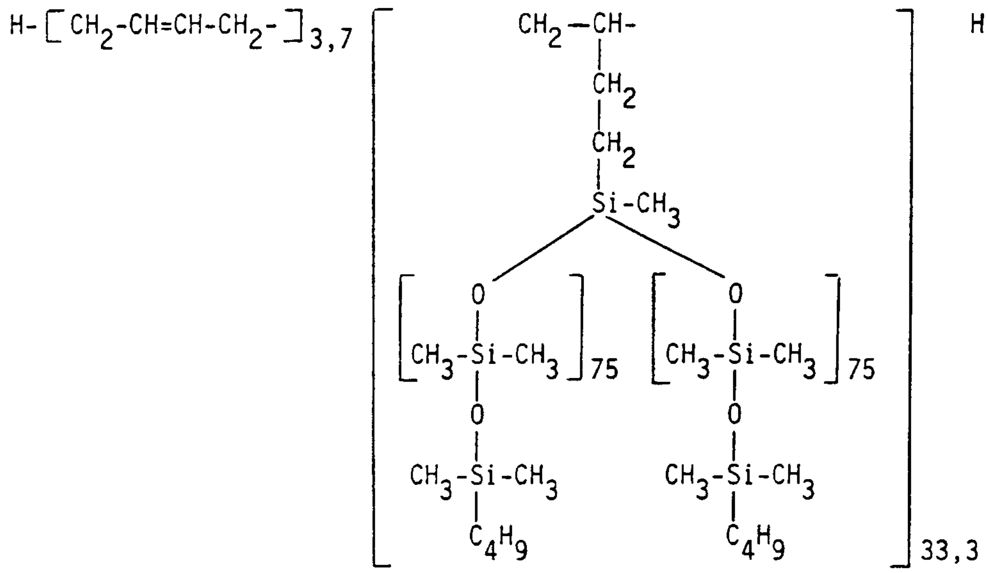

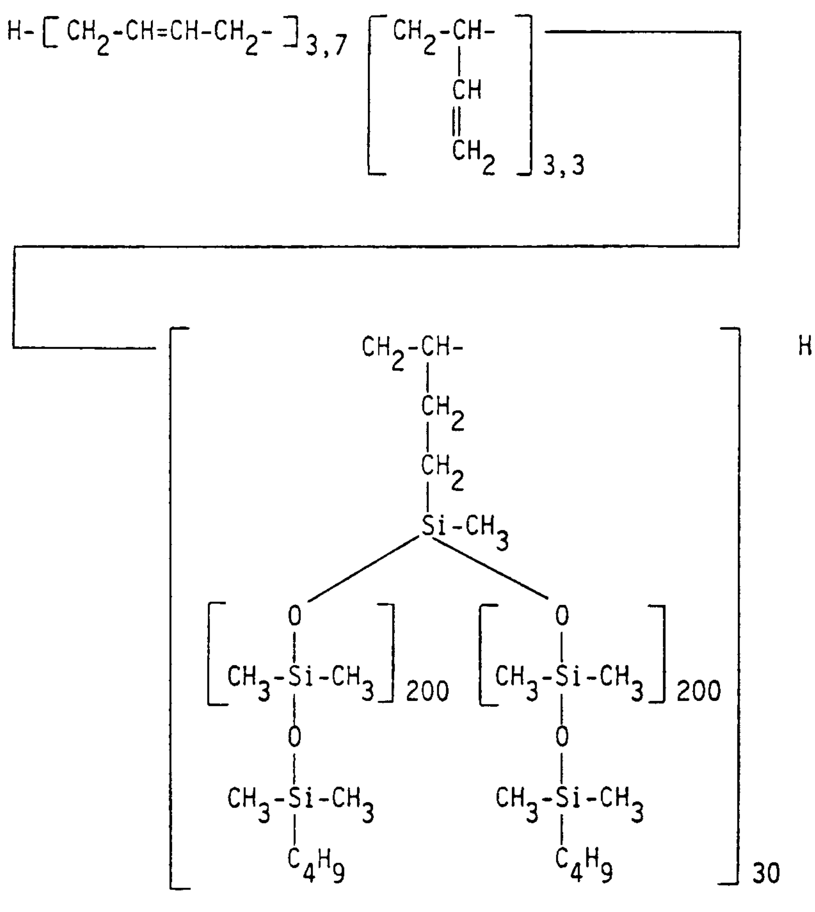

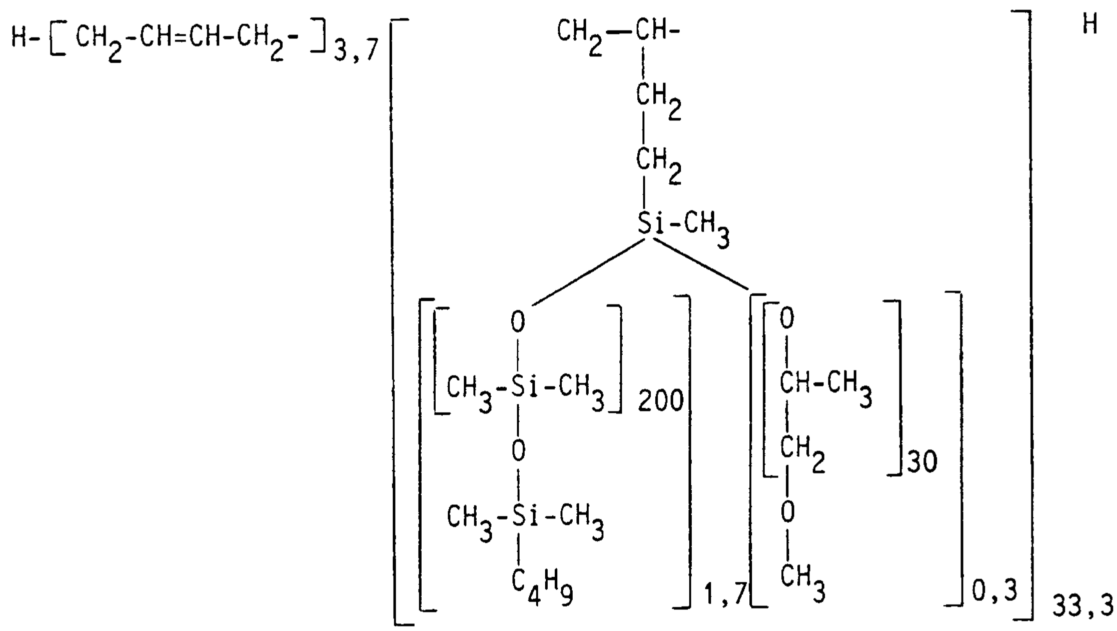

Ein weiterer Gegenstand der Erfindung ist ein Verfahren zum Entschäumen und/oder Entlüften organischer Systeme, wie Erdöl, Hydrauliköl, Lacke und Farben. Bei diesem Verfahren werden den organischen Systemen 0,01 bis 1,0 Gew.-%, bezogen auf organisches System, organosiliciummodifizierter Polydiene der allgemeinen Formel

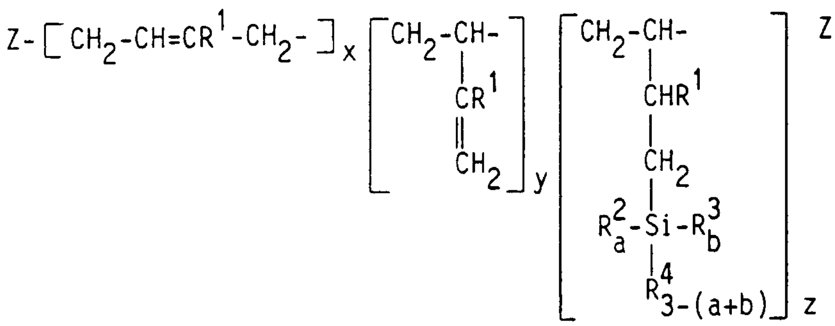

Z = kettenbegrenzende Gruppe,
$R^1$ = Wasserstoff- oder Methylrest,
$R^2$ = Alkylrest mit 1 bis 6 Kohlenstoffatomen oder Phenylrest,
$R^3$ = $OR^5$-Rest, $R^5$ = Alkylrest, der Rest $(C_nH_{2n}O)_mR^6$,
$R^6$ = Alkylrest, Acylrest, Alkylarylrest, n = 2 oder 3,
$m \geq 1$, oder der Rest $C_pF_{2p+1}(CH_2)_2$-,
p = 4 bis 16,
$R^4$ =

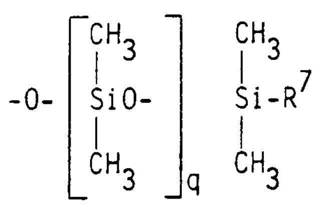

$R^7$ = Alkylrest mit 1 bis 6 Kohlenstoffatomen oder Phenylrest,

q $\geq 3$,
x, y $\geq 0$,
z $\geq 3$,
a $= 0$ bis 2,
b $= 0$ bis 2,
a + b $\leq 2$,

gegebenenfalls in einem mit dem organischen System verträglichen Lösungsmittel gelöst, zugesetzt und in dem organischen System verteilt.

Vorzugsweise werden bei dem erfindungsgemäßen Verfahren die organosiliciummodifizierten Polydiene in Form einer Lösung in einem geeigneten Lösungsmittel eingesetzt. Hierdurch wird die Dosierung und Verteilung der Blockcopolymerisate erleichtert. Die Lösungsmittel müssen mit dem zu entschäumenden und/oder zu entlüftenden System verträglich sein. Geeignete Lösungsmittel sind aromatische Kohlenwasserstoffe, wie Toluol oder Xylol, sowie Gemische aus Estern und Ketonen. Man verwendet zweckmäßig 10 bis 50 %ige Lösungen.

Die Entschäumungs- und Entlüftungsmittel können für verschiedenartige organische Systeme verwendet werden, wobei insbesondere folgende Systeme zu nennen sind: Mineralöle, die als Hydrauliköle eingesetzt werden; bei der Erdölförderung anfallende, Erdgas enthaltende Rohöle; Lacke und Farben, welche in Lösemittel gelöste Kunstharze enthalten, wie z.B. Polyvinylchlorid, Copolymerisate aus Vinylchlorid, Vinylacetate und Maleinsäure, ölfreie Polyester, säurehärtende Kombinationen aus Alkydharzen, Melaminharzen und Nitrocellulose.

Die Copolymerisate werden diesen Systemen in Mengen von 0,01 bis 1,0 Gew.-%, bezogen auf die organischen Systeme, zugesetzt.

Die anwendungstechnischen Eigenschaften der die organosiliciummodifizierten Polydiene enthaltenden Produkte werden im allgemeinen bei ihrer weiteren Verwendung nicht störend beeinflußt.

In den folgenden Beispielen werden die an sich bekannte Herstellung der Verbindungen und deren Verwendung als Entschäumungs- und Entlüftungsmittel näher gezeigt.

I. Herstellung der erfindungsgemäß zu verwendenden Verbindungen

In einem mit einem Rührer, Rückflußkühler, Thermometer und Tropftrichter versehenen Reaktionskessel werden 2000 g 1.2-Polybutadien, welches ein auf den Vinylgruppengehalt bezogenes Äquivalentgewicht von 60,14 g aufweist und einer durchschnittlichen Formel von

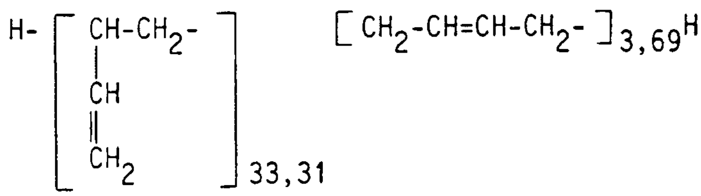

entspricht, in 6400 g Toluol gelöst. Diese Lösung wird unter Rühren auf 60 °C erwärmt und bei dieser Temperatur mit 500 mg Hexachloroplatinsäure, gelöst in 4 Mol Tetrahydrofuran (Katalysatorlösung), versetzt und auf 75 °C aufgeheizt. Danach läßt man langsam 4208 g Methylhydrogendichlorsilan (d.s. 110 % der zur Addition an die Vinylgruppen benötigten Menge) zufließen. Die Zugabegeschwindigkeit wird so einreguliert, daß die Temperatur des Reaktorinhaltes nicht über 100 °C ansteigt. Nach Beendigung der Silanzugabe wird das Reaktionsgut zur Vervollständigung des Umsatzes 1 Stunde bei 100 °C gehalten. Danach wird das überschüssige Methylhydrogendichlorsilan und ein Teil des Toluols abdestilliert. Die Destillation ist beendet, wenn die Temperatur am Dampfübergang 110 °C erreicht. Der Inhalt des Reaktionsgefäßes wird abgekühlt und von der toluolischen Lösung des Reaktionsgutes der Festkörpergehalt und der Gehalt an hydrolysierbarem Chlor, ausgedrückt als Säurewert in mval je g Feststoff, bestimmt.

Die Lösung des Reaktionsproduktes hat einen Feststoffgehalt von 42,4 % und einen Säurewert von 11,20 mval/g, bezogen auf lösungsmittelfreies Produkt. Daraus errechnet sich für den Feststoff ein Äquivalentgewicht von 89,28 g.

Zur Herstellung der Verbindungen der Formel

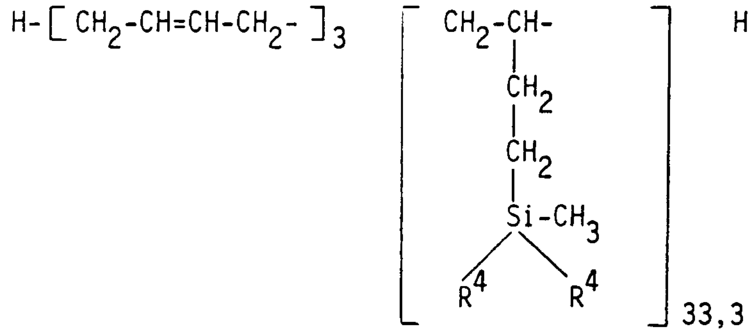

werden jeweils 89,28 g Feststoff entsprechend 210,6 g der 42,4 %igen Lösung des oben beschriebenen Methylhydrogendichlorsilan-Adduktes an 1.2-Polybutadien in ein mit Rührer, Thermometer, Rückflußkühler und Tropftrichter versehenes Reaktionsgefäß gegeben. Man läßt eine 30 %ige Lösung von Lithiumsiloxanolat in Toluol bei 70 °C innerhalb von 1 Stunde zufließen. Es wird jeweils 1 Äquivalent des Lithiumsiloxanolates pro Äquivalent des oben beschriebenen Adduktes eingesetzt. nachdem alles eingetropft ist, läßt man 1 Stunde bei 70 °C nachreagieren, kühlt dann auf 40 °C ab und trennt das entstandene Lithiumchlorid durch Filtration ab. Das Filtrat wird dann nach Bestimmung des Festkörpergehaltes mit Toluol auf 25 % Festkörpergehalt eingestellt.

Nachfolgend ist eine Reihe von nach diesem Verfahren hergestellten Polymeren zusammengestellt

| Verbindung | $R^4$ = |
|---|---|
| 1 a | 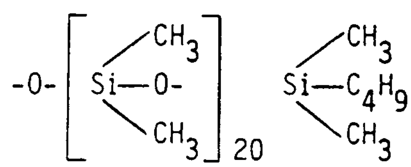 |
| 1 b | 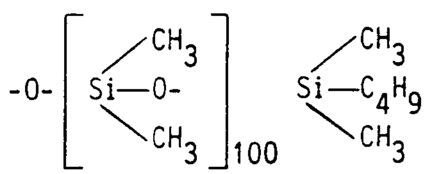 |
| 1 c | 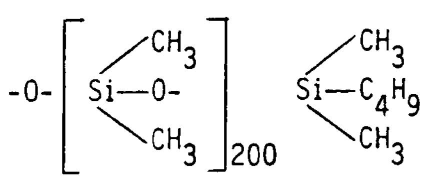 |
| 1 d | 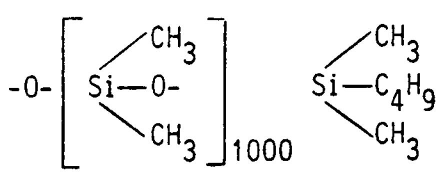 |

II. Erfindungsgemäße Verwendung der Verbindungen als Entschäumungs-und Entlüftungsmittel

1. Die Polymeren 1 a bis 1 d werden in einen Chlorkautschuklack folgender Zusammensetzung in Konzentrationen von 0,1 % und 0,2 % der 25 %igen Lösung der erfindungsgemäß zu verwendenden Verbindungen eingearbeitet

| | |
|---|---|
| Pergut S 10 | 10,9 Gew.-Teile |
| Alkydal F 48 (65 %ig) | 16,8 Gew.-Teile |
| Leromoll 211 | 3,0 Gew.-Teile |
| Palatinol C | 2,7 Gew.-Teile |
| Soja-Lezithin | 0,2 Gew.-Teile |
| Bentonepaste (10 %ig | 1,75 Gew.-Teile |
| Bayferrox 130 M | 15,8 Gew.-Teile |
| Schwerspat EWO | 25,4 Gew.-Teile |
| Härter | 1,25 Gew.-Teile |
| Xylol | 20,8 Gew.-Teile |

Die Lackansätze werden nach drei verschiedenen, im folgenden beschriebenen Verfahren untersucht.

1 a) Schaumbildung

100 g Lack werden in einen Plastikbecher mit einem Durchmesser von 6 cm eingewogen und 1 Minute mit einer Turbine (Durchmesser 4 cm) bei einer Drehzahl von 2500 Umdrehungen je Minute gerührt. Die dabei in den Lack eingerührte Luftmenge wird durch Auswiegen von 50 ml des gerührten Lackes bestimmt. Der Volumenanteil eingeschlossener Luftblasen wird nach folgender Formel berechnet:

$$\text{Vol\% Luft} = 100 - \frac{\text{Gewicht von 50 ml des gerührten Lackes} \times 2}{\gamma_D}$$

wobei $\lambda_D$ die Dichte des ungerührten Lackes ist.

1 b) Schaumzerfall

In der gleichen Weise wird gerührter Lack unmittelbar nach dem Einrühren von Luft auf eine auf einer schiefen Ebene, die um 25° von der Senkrechten abweicht, liegende Glasplatte gegossen. Nach dem Trocknen der Lackschicht wird der Lackfilm optisch beurteilt und die auf der Oberfläche sichtbaren Blasen oder Oberflächenstörungen je Flächeneinheit ausgezählt.

1 c) Entlüftung

Mittels einer Rakel wird auf eine sorgfältig entfettete Glasplatte ein Lackfilm mit 250 µm Naßfilmstärke aufgezogen. Nach dem Trocknen wird die Lackschicht von unten her mit einer starken Lichtquelle durchleuchtet. Nadelstiche, die auf Mikroschaum zurückführbar sind, werden deutlich sichtbar und können ausgezählt werden. Die Zahl von Nadelstichen je 100 $cm^2$ ist ein Maß für die entlüftende Wirkung der dem Lack zugegebenen Wirkstoffe.

Zum Vergleich wird ein als Entschäumer bzw. Entlüfter wirkendes Handelsprodukt auf der Basis eines Fluoralkylgruppen tragenden Siloxans eingesetzt.

In Tabelle 1 sind die Prüfergebnisse zusammengestellt.

Tabelle 1

| Verbindung | Rührtest Vol.-% Luft | Schaumzerfall Zahl der Blasen | Entlüftung Zahl der Nadelstiche |
|---|---|---|---|
| ohne Zusatz | 4,9 | 260 | nicht auszählbar |
| 1 a 0,1 % | 3,2 | 38 | keine Nadelstiche bis zum Untergrund, einige Mikrokrater auf der Oberfläche erkennbar |
| 1 a 0,2 % | 2,9 | 17 | |
| 1 b 0,1 % | 3,1 | 4 | vereinzelte Nadelstiche |
| 1 b 0,2 % | 2,8 | 4 | vereinzelte Nadelstiche |
| 1 c 0,1 % | 3,1 | 0 | 0 |
| 1 c 0,2 % | 2,6 | 0 | 0 |
| 1 d 0,1 % | 2,9 | 0 | 0 |
| 1 d 0,2 % | 2,6 | 0 | 0 |
| Vergleich | | | |
| 0,1 % | 2,9 | 220 | 78 |
| 0,4 % | 2,8 | 156 | 46 |

2. Die Verbindungen werden in einem für die Holzbeschichtung einsetzbaren Vinylharzklarlack in der beschriebenen Weise ausgeprüft. Der Lack weist folgende Zusammensetzung auf

| | |
|---|---|
| Vinylite VMCC | 20,0 Gew.-Teile |
| Ethylglykolacetat | 56,0 Gew.-Teile |
| Methylisobutylketon | 8,0 Gew.-Teile |
| Xylol | 1,0 Gew.-Teile |
| Tego Glide 410 (10 %ig in Xylol) | 0,5 Gew.-Teile |

Die erfindungsgemäß zu verwendenden Verbindungen werden aber 25 %igen Lösungen in Mengen von 0,1 % und 0,2 % zugefügt.

Die Ergebnisse sind in Tabelle 2 zusammengestellt.

Tabelle 2

| Verbindung | Rührtest Vol.-% Luft | Schaumzerfall Zahl der Blasen | Entlüftung Zahl der Nadelstiche |
|---|---|---|---|
| ohne Zusatz | 12,1 | 93 | sehr viele |
| 1 a 0,1 % | 4,0 | 18 | 0 |
| 1 a 0,2 % | 3,6 | 8 | 0 |
| 1 b 0,1 % | 2,8 | 11 | 0 |
| 1 b 0,2 % | 2,4 | 2 | 0 |
| 1 c 0,1 % | 2,4 | 3 | 0 |
| 1 c 0,2 % | 2,4 | 3 | 0 |
| 1 d 0,1 % | 6,9 | 40 | vereinzelte Nadelstiche |
| 1 d 0,2 % | 6,9 | 22 | vereinzelte Nadelstiche |

3. Nach dem bereits beschriebenen Verfahren werden die nachfolgend aufgeführten erfindungsgemäß zu verwendenden Verbindungen hergestellt

| Verbindung | $R^4$ = |
|---|---|
| 2 a | 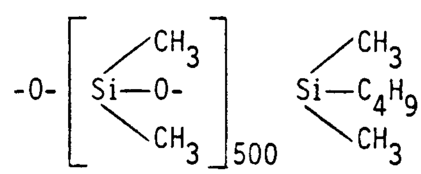 |

2 b

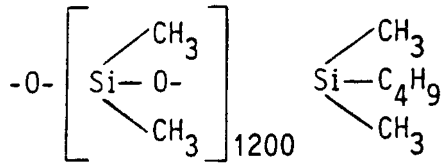

2 c

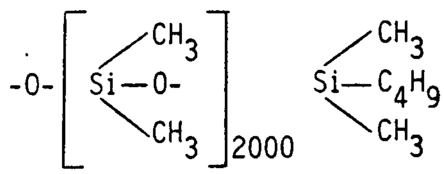

Die Prüfung auf Wirksamkeit erfolgt in einer Meßvorrichtung nach DIN 51 381, bestehend aus einem temperierten Probengefäß und einer Kapillare zum Durchleiten von Luft. In die Meßvorrichtung werden 180 ml eines handelsüblichen, aber entschäumerfreien Hydrauliköls eingefüllt und auf 25 °C temperiert. Durch die Kapillare (Ø = 0,5 mm) wird die Meßprobe anschließend bei einem Überdruck von 150 mm Hg über eine Zeit von 7 Minuten begast. Nach Beendigung des Luftdurchleitens wird die Kapillare entfernt und einerseits der Oberflächenschaum beurteilt, andererseits die aufgenommene Menge Luft über eine Dichtemessung bestimmt. Die überprüften Produkte werden in einer Konzentration von 0,05 Gew.-% (bezogen auf den Wirkstoff) eingesetzt).

Die Ergebnisse sind in Tabelle 3 zusammengestellt.

Tabelle 3

| Verbindung | Schaumhöhe in mm | Luftgehalt in % |
|---|---|---|
| ohne Entschäumer | 5 | 3,6 |
| Dimethylpolysiloxan Viskosität 60 000 mPas nicht erfindungsgemäß | 3 | 2,5 |
| 2 a | 1 | 0,9 |
| 2 b | < 1 | 0,8 |
| 2 c | < 1 | 0,6 |

## Patentansprüche

**1.** Verwendung von organosiliciummodifizierten Polydienen der allgemeinen Formel

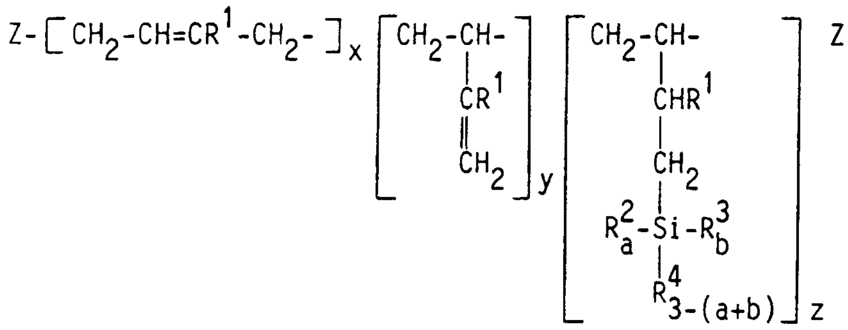

| | |
|---|---|
| Z | = kettenbegrenzende Gruppe, |
| $R^1$ | = Wasserstoff- oder Methylrest, |
| $R^2$ | = Alkylrest mit 1 bis 6 Kohlenstoffatomen oder Phenylrest, |
| $R^3$ | = $OR^5$-Rest, $R^5$ = Alkylrest, der Rest $(C_nH_{2n}O)_mR^6$, $R^6$ = Alkylrest, Acylrest, Alkylarylrest, n = 2 oder 3, m $\geqq$ 1, oder der Rest $C_pF_{2p+1}(CH_2)_2$-, p = 4 bis 16, |
| $R^4$ | = |

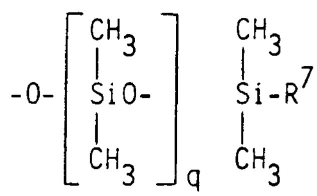

| | |
|---|---|
| $R^7$ | = Alkylrest mit 1 bis 6 Kohlenstoffatomen Phenylrest, |
| q | $\geqq$ 2, |
| x, y | $\geqq$ 0, |
| z | $\geqq$ 3, |
| a | = 0 bis 2, |
| b | = 0 bis 2, |
| a + b | $\leqq$ 2, |

in Mengen von 0,01 bis 1,0 Gew.-% zur Entschäumung und/oder Entlüftung organischer Systeme, wie Erdöl, Hydrauliköle, Lacke oder Farben.

**2.** Verfahren zum Entschäumen und/oder Entlüften organischer Systeme, wie Erdöl, Hydrauliköl, Lacke und Farben, dadurch gekennzeichnet, daß man den organischen Systemen 0,01 bis 1,0 Gew.-%, bezogen auf organisches System, organosiliciummodifizierter Polydiene der allgemeinen Formel

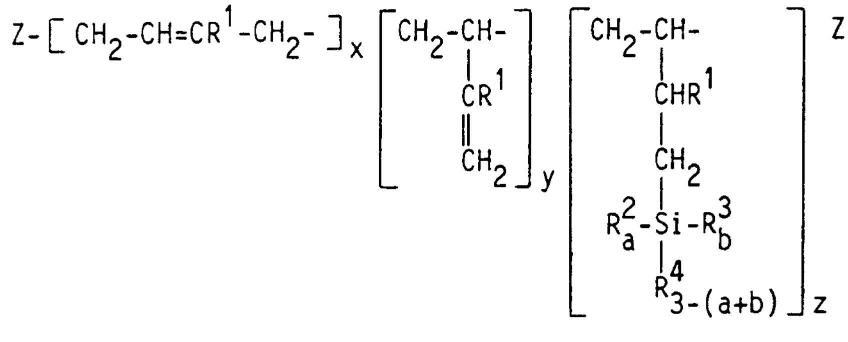

Z = kettenbegrenzende Gruppe,
$R^1$ = Wasserstoff- oder Methylrest,
$R^2$ = Alkylrest mit 1 bis 6 Kohlenstoffatomen oder Phenylrest,
$R^3$ = $OR^5$-Rest, $R^5$ = Alkylrest, der Rest $(C_nH_{2n}O)_mR^6$, $R^6$ = Alkylrest, Acylrest, Alkylarylrest, n = 2 oder 3, m ≧ 1, oder der Rest $C_pF_{2p+1}(CH_2)_2$-, p = 4 bis 16,
$R^4$ =

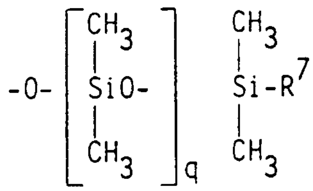

$R^7$ = Alkylrest mit 1 bis 6 Kohlenstoffatomen oder Phenylrest,
q ≧ 3,
x, y ≧ 0,
z ≧ 3,
a = 0 bis 2,
b = 0 bis 2,
a + b ≦ 2,

gegebenenfalls in einem mit dem organischen System verträglichen Lösungsmittel gelöst, zusetzt und in dem organischen System verteilt.

## Claims

1. Use of organosilicon-modified polydienes of the general formula

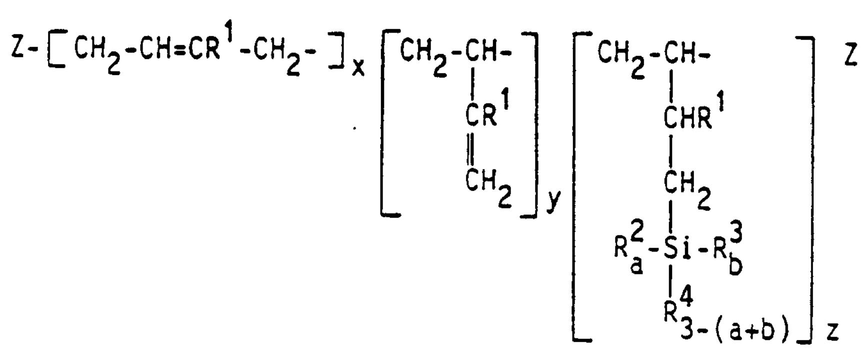

Z = a chain-limiting group,
$R^1$ = a hydrogen or methyl radical,
$R^2$ = an alkyl radical having 1 to 6 carbon atoms or a phenyl radical,
$R^3$ = an $OR^5$ radical, $R^5$ = an alkyl radical, the radical $(C_nH_{2n}O)_mR^6$, $R^6$ = an alkyl radical, acyl radical or alkylaryl radical, n = 2 or 3, m ≧ 1, or the radical $C_pF_{2p+1}(CH_2)_2$-, p = 4 to 16,
$R^4$ =

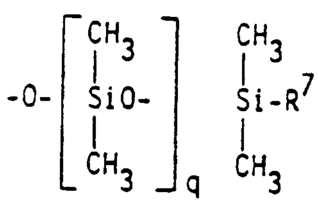

$R^7$ = an alkyl radical having 1 to 6 carbon atoms or a phenyl radical,

| | |
|---|---|
| q | ≧ 3, |
| x and y | ≧ 0, |
| z | ≧ 3, |
| a | = 0 to 2, |
| b | = 0 to 2 and |
| a+b | ≦ 2, |

in amounts of 0.01 to 1.0% by weight for defoaming and/or deaerating organic systems, such as crude oil, hydraulic oils, lacquers or paints.

**2.** Process for defoaming and/or deaerating organic systems, such as crude oil, hydraulic oil, lacquers and paints, characterised in that 0.01 to 1.0% by weight, based on the organic system, of organosilicon-modified polydienes of the general formula

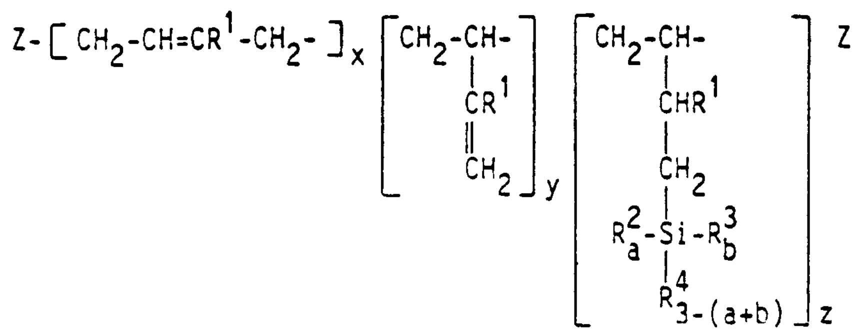

| | |
|---|---|
| Z | = a chain-limiting group, |
| $R^1$ | = a hydrogen or methyl radical, |
| $R^2$ | = an alkyl radical having 1 to 6 carbon atoms or a phenyl radical, |
| $R^3$ | = an $OR^5$ radical, $R^5$ = an alkyl radical, the radical $(C_nH_{2n}O)_mR^6$, $R^6$ = an alkyl radical, acyl radical or alkylaryl radical, n = 2 or 3, m ≧ 1, or the radical $C_pF_{2p+1}(CH_2)_2$-, p = 4 to 16, |
| $R^4$ | = |

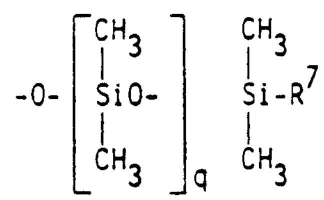

| | |
|---|---|
| $R^7$ | = an alkyl radical having 1 to 6 carbon atoms or a phenyl radical, |
| q | ≧ 3, |
| x and y | ≧ 0, |
| z | ≧ 3, |
| a | = 0 to 2, |
| b | = 0 to 2 and |
| a+b | ≦ 2, |

is added to the organic system, if appropriate as a solution in a solvent which is compatible with the organic system, and is distributed in the organic system.

**Revendications**

**1.** Utilisation de polydiènes modifiés avec des composés organosiliciés, répondant à la formule générale :

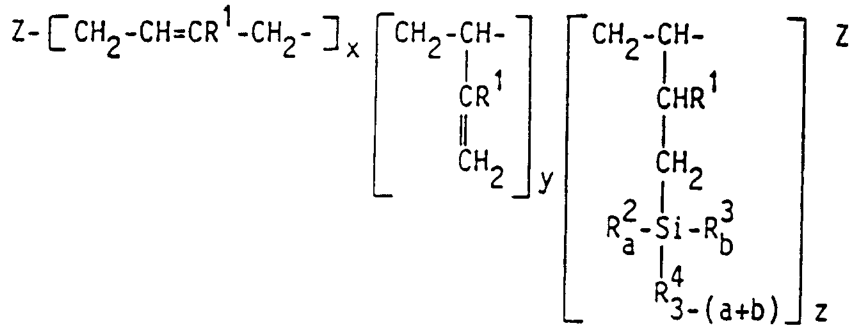

Z = un groupe limiteur de chaîne,
$R^1$ = un reste hydrogène ou méthyle,
$R^2$ = un reste alkyle à 1 à 6 atomes de carbone ou un reste phényle,
$R^3$ = un reste $OR^5$ où $R^5$ = un reste alkyle, ou le reste $(C_nH_{2n}O)_mR^6$ où $R^6$ = un reste alkyle, un reste acyle ou un reste alkylaryle, n = 2 ou 3, m ≧, 1, ou le reste $C_pF_{2p+1}(CH_2)_2$- où p = 4 à 16,
$R^4$ =

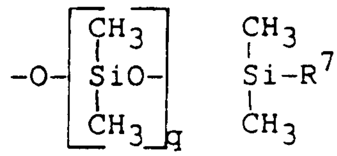

$R^7$ = un reste alkyle contenant 1 à 6 atomes de carbone, ou un reste phényle,
q ≧ 3,
x, y ≧ 0,
z ≧ 3,
a = 0 à 2,
b = 0 à 2,
a + b ≦ 2,

en des quantités allant de 0,01 à 1,0 % en poids, pour l'élimination de la mousse ou la désaération de systèmes organiques tels que le pétrole, des huiles hydrauliques, des vernis ou des peintures.

**2.** Procédé d'élimination de mousse et/ou de désaération de systèmes organiques tels que le pétrole, une huile hydraulique, des vernis et des peintures, caractérisé en ce qu'on ajoute, à ces systèmes, de 0,01 à 1,0 % en poids, par rapport au système organique, de polydiènes modifiés avec des composés organosiliciés, répondant à la formule générale :

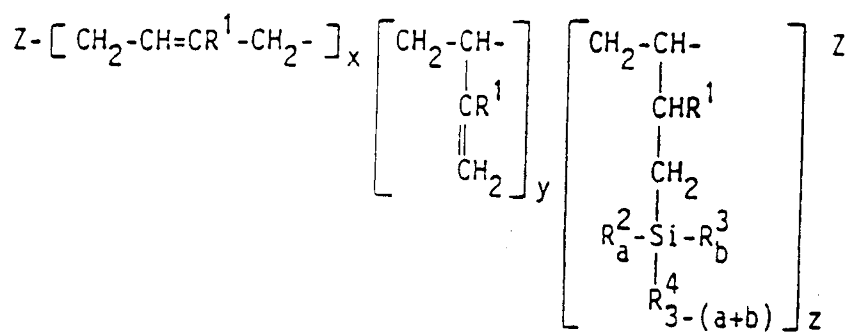

Z = un groupe limiteur de chaîne,

$R^1$ = un reste hydrogène ou méthyle,

$R^2$ = un reste alkyle à 1 à 6 atomes de carbone ou un reste phényle,

$R^3$ = un reste $OR^5$ où $R^5$ = un reste alkyle, ou le reste $(C_nH_{2n}O)_mR^6$ où $R^6$ = un reste alkyle, un reste acyle ou un reste alkylaryle, n = 2 ou 3, m ≧ 1, ou le reste $C_pF_{2p+1}(CH_2)_2$- où p = 4 à 16,

$R^4$ =

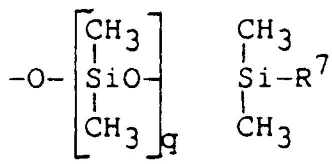

$R^7$ = un reste alkyle contenant 1 à 6 atomes de carbone, ou un reste phényle,

q ≧ 3,

x, y ≧ 0,

z ≧ 3,

a = 0 à 2,

b = 0 à 2,

a + b ≧ 2,

éventuellement dans un solvant compatible avec le système organique, et on disperse ces polydiènes dans le système organique.